# EUROPEAN PATENT SPECIFICATION

(11) **EP 4 546 116 B1**
(45) Date of publication and mention of the grant of the patent: **16.09.2026**
(21) Application number: 23892754.5
(22) Date of filing: 18.12.2023
(51) Int. Cl.: G06F 8/61, H01M 10/42

(54) **PARALLEL BURNING SYSTEM AND METHOD**
PARALLELES VERBRENNUNGSSYSTEM UND VERFAHREN
SYSTÈME ET PROCÉDÉ DE GRAVURE PARALLÈLE

(30) Priority: 13.09.2023 CN 202311179206
(43) Date of publication of application: 30.04.2025
(73) Proprietor: Contemporary Amperex Technology (Hong Kong) Limited, Central, Central And Western District (HK)
(72) Inventor: LI, Yanghu, Ningde Fujian 352100 (CN); LIAN, Dengwei, Ningde Fujian 352100 (CN)
(74) Representative: Ran, Handong
(86) International application number: PCT/CN2023/139481
(87) International publication number: WO 2025/055186

(56) References cited:
- CN-A- 101 359 317
- CN-A- 106 970 810
- CN-A- 109 086 055
- CN-A- 109 165 025
- CN-A- 109 189 402
- CN-A- 113 934 439
- CN-A- 116 909 592
- CN-B- 107 992 317
- US-A1- 2009 089 469

## Description

### Technical Field

The present disclosure relates to the field of battery production technologies, and in particular to a parallel burning system and method.

### Background

In the battery production process, a control program is burned into a component of BMU (Battery Management Unit) of a pack during assembling of the pack. In related technologies, single burning software can only be used to burn the same type of BMU components, resulting in a low burning efficiency.

CN107992317B discloses a burning verification method of an electric quantity management and current monitoring IC of a battery core. The burning verification method includes a burning method and a verification method of battery information, the verification method includes a current verification method and an electric quantity verification method, and the electric quantity verification method comprises the steps of S1, firstly, verifying electric quantity values of multiple electric quantity management and current monitoring IC samples according to an electric quantity management and current monitoring IC verifying mechanism, and recording verifying coefficients of all channels; S2, secondly, conducting data processing on the verifying coefficients in the step S1; S3, thirdly, writing the processed verifying coefficients in the step S2 into upper computer software in a fixed value mode, and calling the verifying coefficients from the upper computer software while burning; S4, finally,during burning, monitoring the number of poorly verified electric quantity management and current monitoring IC products, returning to the step S1 if a reject ratio reaches a set value, otherwise continuing burning. The burning verifying method of the electric quantity management and current monitoring IC of the battery core is used for improving the burning and calibrating verification efficiency of the electric quantity management and current monitoring IC of the battery core.

CN113934439A discloses a system comprising an upper computer carrying upper computer software, a USB concentrator and a USB to serial port module; the USB concentrator is used for connecting the USB to serial port module into an upper computer, and the USB to serial port module is connected with a product to be burnt; a read-only memory is embedded in the USB to serial port module and stores information of each channel; the upper computer software automatically traverses all the USB devices connected to the upper computer, content matching is carried out according to descriptors of the USB devices and the information stored in the read-only memory, and if matching succeeds, the port number of the corresponding channel is obtained; and in a multi-thread parallel control mode, interacting with the to-be-burnt product is carried out through a serial port protocol until file downloading is completed and verification is carried out, and burning the Bluetooth MAC address and serial number information of the product are burnt. According to the system and method, multi-channel parallel burning is configured through upper computer software, and the burning efficiency on a production line is improved.

### Summary of the Invention

In view of this, embodiments of the present disclosure at least provide a parallel burning system and method, which may realize parallel burning. Moreover, the communication modes between burning modules and products to be burned in different burning channels are different and will not be interfered with by other channels, thus ensuring the stability of the burning channels.

Technical solutions of the embodiments of the present application are implemented as follows.

In a first aspect, an embodiment of the present disclosure provides a parallel burning system, including a master host computer, a plurality of slave host computers, and a plurality of burning modules; wherein:
the master host computer is connected to the plurality of slave host computers;
the plurality of slave host computers are connected one to one with the plurality of burning modules, constituting a plurality of burning channels;
the plurality of burning modules are connected to a plurality of products to be burned by using different communication modes in the plurality of burning channels; and
the master host computer is used to call the plurality of slave host computers to transmit multiple pieces of burning data corresponding to the plurality of products to be burned to the plurality of burning modules via the plurality of burning channels, and burn the multiple pieces of burning data in parallel by means of the plurality of burning modules to the plurality of products to be burned.

It can be understood that the plurality of slave host computers are connected one to one with the plurality of burning modules to constitute the plurality of burning channels, and parallel burning of BMUs of different products may be realized via the plurality of burning channels; moreover, the communication modes between burning modules and products to be burned in different burning channels are different and will not be interfered with by other channels, thus ensuring the stability of the burning channels.

In some embodiments, the system further includes a multi-channel control module;
the multi-channel control module is connected between the plurality of slave host computers and the plurality of burning modules; and
the multi-channel control module is configured to control the connection and disconnection of the plurality of burning channels.

It can be understood that by means of the multi-channel control module, the connection and disconnection of the plurality of burning channels may be realized, so that the plurality of burning channels can be adjusted in real time according to the business requirements and the waste of resources can be reduced.

In some embodiments, the multi-channel control module includes an adapter module;
the multi-channel control module is configured to control the connection and disconnection in hardware of the plurality of burning modules to the adapter module, and/or to control the connection and disconnection in hardware of the plurality of slave host computers to the adapter module, so as to realize the connection and disconnection of the plurality of burning channels.

It can be understood that the connection and disconnection in hardware of the plurality of burning channels can be realized quickly and accurately by means of the adapter module.

In some embodiments, the adapter module includes a first group of adapters and a second group of adapters;
the first group of adapters are connected to the plurality of slave host computers, and the second group of adapters are connected to the plurality of burning modules; and
the number of adapters in the first group of adapters, the number of adapters in the second group of adapters, the number of the slave host computers, and the number of the burning modules are the same.

It can be understood that the first group of adapters are connected to the plurality of slave host computers and the second group of adapters are jointed with the plurality of burning modules, so that the connection in hardware of the plurality of slave host computers to the plurality of burning modules can be realized. Moreover, the number of adapters in the first group of adapters, the number of adapters in the second group of adapters, the number of the slave host computers, and the number of the burning modules are the same to realize a one-to-one connection between the plurality of slave host computers and the plurality of burning modules.

In some embodiments, the multi-channel control module is further configured to distribute power to the plurality of burning modules.

It can be understood that the power of the plurality of burning modules is distributed by the multi-channel control module, which may provide a guarantee to the power requirements of the plurality of burning modules.

In some embodiments, the system further includes a verification module;
the verification module is configured to perform data verification on the plurality of products to be burned during the processing of the plurality of products to be burned.

It can be understood that verification of data during the burning process may prevent data confusion, product misalignment and other abnormalities in the parallel burning process, thus ensuring the accuracy of parallel burning.

In some embodiments, the system further includes a burning file management system;
the burning file management system is deployed on a computer device other than the master host computer, and establishes a communication connection with the master host computer; and
the burning file management system is configured to store data corresponding to the plurality of products to be burned.

It can be understood that the setting of a separate burning file management system may facilitate the unified management of data during the burning process.

In some embodiments, the master host computer is connected to the plurality of slave host computers by using the same communication mode.

It can be understood that the master host computer is connected to the plurality of slave host computers by using the same communication mode, which helps the master host computer to call the plurality of slave host computers.

In some embodiments, each product to be burned is a battery management unit BMU of a pack, and burning data corresponding to each BMU contains an underlying jump file and application software.

It can be understood that as the burning data includes the underlying jump file and application software the underlying jump file is burned first and the application software is then burned after a jump during burning, thus ensuring the burning performability.

In another aspect, an embodiment of the present disclosure provides a parallel burning method applied to a master host computer in a parallel burning system. The system includes a plurality of slave host computers and a plurality of burning modules; the method includes:
determining, based on product numbers of a plurality of products to be burned, multiple pieces of burning data corresponding to the plurality of products to be burned;
calling the plurality of slave host computers to transmit the multiple pieces of burning data to the plurality of burning modules via a plurality of burning channels constituted after the plurality of slave host computers are connected one to one with the plurality of burning modules; and
establishing a connection between the plurality of burning modules and the plurality of products to be burned by using different communication modes in the plurality of burning channels, and burning the multiple pieces of burning data in parallel by means of the plurality of burning modules to the plurality of products to be burned.

It can be understood that parallel burning of BMUs of different products can be realized via the plurality of burning channels; moreover, the communication modes between burning modules and products to be burned in different burning channels are different and will not be interfered with by other channels, thus ensuring the stability of the burning channels.

In some embodiments, the system further includes a burning file management system;
determining, based on product numbers of the plurality of products to be burned, multiple pieces of burning data corresponding to the plurality of products to be burned comprises:
scanning graphic identifiers on the plurality of products to be burned to obtain the product numbers of the plurality of products to be burned; and
obtaining, based on the product numbers of the plurality of products to be burned, multiple pieces of burning data corresponding to the plurality of products to be burned from the burning file management system.

It can be understood that the burning data are stored in the burning file management system with high confidentiality, which may ensure the security of the burning data.

In some embodiments, calling the plurality of slave host computers to transmit the multiple pieces of burning data to the plurality of burning modules via a plurality of burning channels constituted after the plurality of slave host computers are connected one to one with the plurality of burning modules includes:
determining first data identifiers of the multiple pieces of burning data obtained from the burning file management system;
determining a pre-stored first corresponding relationship between products to be burned and burning data;
performing a first verification on the multiple pieces of burning data on the basis of the first corresponding relationship and the first data identifiers of the multiple pieces of burning data; and
in the case of a first verification result indicating a successful verification, calling the plurality of slave host computers to transmit the multiple pieces of burning data to the plurality of burning modules via the plurality of burning channels.

It can be understood that the first corresponding relationship between the products to be burned and the burning data is pre-stored in the master host computer, which may facilitate the verification of the multiple pieces of burning data obtained from the burning file management system to ensure the accuracy of parallel burning.

In some embodiments, performing a first verification on the multiple pieces of burning data on the basis of the first corresponding relationship and the first data identifiers of the multiple pieces of burning data includes:
determining, based on the product identifier of each product to be burned, a second data identifier of each product to be burned from the first corresponding relationship;
determining a first verification result that indicates a successful verification when the first data identifier of each product to be burned matches the second data identifier of the product to be burned; and
determining a first verification result that indicates a failed verification when the first data identifier of each product to be burned does not match the second data identifier of the product to be burned.

It can be understood that the first data identifier of the burning data obtained from the burning file management system matches the second data identifier of the burning data obtained from the first corresponding relationship pre-stored in the master host computer to determine the first verification result, which may prevent errors in the burning data and ensure the accuracy of the burning data.

In some embodiments, burning the multiple pieces of burning data in parallel by means of the plurality of burning modules to the plurality of products to be burned includes:
determining preset burning items and burning steps corresponding to each of the plurality of products to be burned; and
in accordance with the burning items and the burning steps, burning the multiple pieces of burning data in parallel by means of the plurality of burning modules to the plurality of products to be burned.

It can be understood that presetting the burning items and burning steps corresponding to the products to be burned facilitates the burning of the products to be burned; furthermore, according to the burning items and burning steps, it is also possible to realize customized burning, thus improving the applicability.

In some embodiments, the method further includes:
performing a second verification on the plurality of burned products before assembling the plurality of burned products; and
in the case of a second verification result indicating a successful verification, assembling the plurality of burned products to obtain a plurality of packs.

It can be understood that assembling the plurality of burned products in the case of the second verification result indicating a successful verification can prevent BMUs on other production lines from being mixed into the current production line, thus ensuring the quality of the packs, and improving the pass rate of the packs.

In some embodiments, performing a second verification on the plurality of burned products before assembling the plurality of burned products includes:
obtaining a second corresponding relationship between products to be burned and packs that is stored during burning;
scanning graphic identifiers of the plurality of burned products to obtain product numbers of the plurality of burned products, and battery identifiers of the packs respectively corresponding to the plurality of burned products; and
performing a second verification on the plurality of burned products on the basis of the product numbers of the plurality of burned products, the battery identifiers respectively corresponding to the plurality of burned products, and the second corresponding relationship.

It can be understood that by the second verification performed using the identifiers scanned in real time and the second corresponding relationship stored during burning, it is possible to determine whether there is any abnormality such as data mismatch, missing, misalignment, or the like in the BMUs on the current production line.

In some embodiments, performing a second verification on the plurality of burned products on the basis of the product numbers of the plurality of burned products, the battery identifiers respectively corresponding to the plurality of burned products, and the second corresponding relationship includes:
determining a second verification result that indicates a successful verification when the product numbers of the plurality of burned products and the battery identifiers respectively corresponding to the plurality of burned products match the second corresponding relationship; and
determining a second verification result that indicates a failed verification when the product numbers of the plurality of burned products and the battery identifiers respectively corresponding to the plurality of burned products do not match the second corresponding relationship.

It can be understood that the identifiers scanned in real time match the second corresponding relationship stored during burning, it is possible to determine whether there is any abnormality such as data mismatch, missing, misalignment, or the like in the BMUs on the current production line.

In some embodiments, the method further includes:
determining a pre-stored first corresponding relationship between products to be burned and burning data;
performing a third verification on the products to be burned in the plurality of packs on the basis of data identifiers of the burning data corresponding to the products to be burned in the plurality of packs and the first corresponding relationship; and
in the case of a third verification result indicating a successful verification, performing a performance test on the plurality of packs.

It can be understood that the third verification performed on the products to be burned in the plurality of packs may provide a further guarantee to the quality of the packs.

In some embodiments, the system further includes a verification module; the method further includes:
performing, by the verification module, data verification on the plurality of products to be burned during the processing of the plurality of products to be burned; the data verification including a first verification, a second verification, and a third verification.

It can be understood that by verifying the data during the burning process with the verification module, it is possible to ensure the accuracy of the parallel burning, thereby ensuring the quality of the packs.

In the embodiments of the present disclosure, the multi-channel parallel burning system with a master-slave dual-layer architecture may implement parallel burning of BMUs of different products; moreover, the burning modules are in communication with products to be burned by using different communication modes in different burning channels, and will not be interfered with by other channels, thus ensuring the stability of the burning channels.

It should be understood that the above general description and the detailed descriptions that follow are exemplary and explanatory only and are not intended to limit the technical solutions of the present disclosure.

### Description of Drawings

The accompanying drawings herein are incorporated into the description and constitute part of the description, illustrate the embodiments conforming to the present disclosure, and are intended to explain the technical solutions of the present disclosure together with the description.
FIG. 1 is a schematic structural diagram of a parallel burning system according to an embodiment of the present disclosure;
FIG. 2 is a schematic structural diagram of a 16-channel relay board according to an embodiment of the present disclosure;
FIG. 3 is a flowchart of implementation of a parallel burning method according to an embodiment of the present disclosure;
FIG. 4 is an interface diagram of burning items according to an embodiment of the present disclosure;
FIG. 5 is an interface diagram of burning steps according to an embodiment of the present disclosure;
FIG. 6 is a flow chart of implementation of another parallel burning method according to an embodiment of the present disclosure;
FIG. 7 is a flow chart of implementation of yet another parallel burning method according to an embodiment of the present disclosure; and
FIG. 8 is a flow chart of implementation of still another parallel burning method according to an embodiment of the present disclosure.

Reference signs in specific embodiments are as follows:

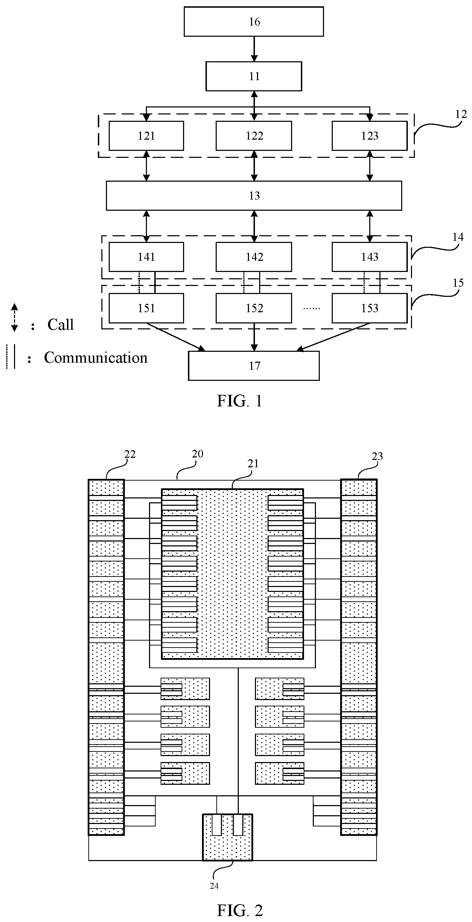

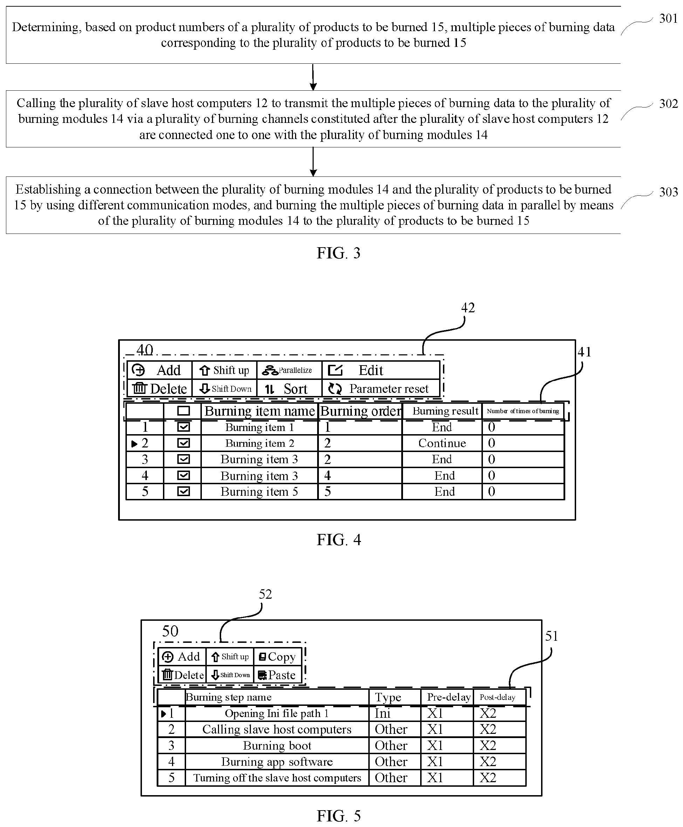

FIG. 1: master host computer 11, a plurality of slave host computers 12, first slave host computer 121, second slave host computer 122, third slave host computer 123, multi-channel control module 13, a plurality of burning modules 14, first burning module 141, second burning module 142, third burning module 143, a plurality of products to be burned 15, first product to be burned 151, second product to be burned 152, third product to be burned 153, burning file management system 16, and verification module 17; FIG. 2: 16-channel relay board 20, main board 21, first group of adapters 22, second group of adapters 23, and power supply 24; FIG. 4: burning items 40, first header 41, and multiple first options 42; and FIG. 5: burning steps 50, second header 51, and multiple second options 52.

### Detailed Description

In order to make the objects, technical solutions and advantages of the present disclosure clearer, the technical solutions of the present disclosure are further elaborated in detail below in combination with the accompanying drawings and embodiments, the described embodiments should not be regarded as limitations of the present disclosure, and all other embodiments obtained by persons of ordinary skills in the art without making creative efforts fall within the protection scope of the present disclosure.

In the following description, "some embodiments" are involved, which describe a subgroup of all possible embodiments, but it is to be understood that "some embodiments" may be the same or different subsets of all possible embodiments and may be combined with each other without conflict.

The terms "first/second/third" are involved only to differentiate between similar objects and do not represent a particular ordering of objects, and it is to be understood that "first/second/third" may be interchanged in a particular order or sequence where permitted to enable the embodiments of the present disclosure described herein to be implemented in a particular order or sequence.

Unless otherwise defined, all technical and scientific terms used herein have the same meanings as those commonly understood by those skilled in the art to which the present disclosure belongs. The terms used herein are merely for the purpose of describing the present disclosure, but are not intended to limit the present disclosure.

Embodiments of the present disclosure provide a parallel burning system. FIG. 1 is a schematic structural diagram of a parallel burning system according to an embodiment of the present disclosure. As shown in FIG. 1, the system includes a master host computer 11, a plurality of slave host computers 12, and a plurality of burning modules 14.

The master host computer 11 is connected to the plurality of slave host computers 12;
the plurality of slave host computers 12 are connected one to one with the plurality of burning modules 14, constituting a plurality of burning channels;
the plurality of burning modules 14 are connected to a plurality of products to be burned 15 by using different communication modes; and
the master host computer 11 is used to call the plurality of slave host computers 12 to transmit multiple pieces of burning data corresponding to the plurality of products to be burned 15 to the plurality of burning modules 14 via the plurality of burning channels, and burn the multiple pieces of burning data in parallel by the plurality of burning modules 14 to the plurality of products to be burned 15.

Each product to be burned is a battery management unit BMU of a pack, and burning data corresponding to each BMU contains an underlying jump file and application software.

Here, the master host computer 11 is used to send a burning task to the plurality of slave host computers 12. The plurality of slave host computers 12 are used to perform a burning operation according to the received burning task. The burning module may refer to a burner, a burning circuit, a burning board, a burning device, and other modules having burning functions, which is not limited in the embodiments of the present disclosure. The plurality of products to be burned 15 may refer to BMU components of different packs (Packs). Burning data corresponding to each BMU may refer to a software package corresponding to each BMU; the software package corresponding to each BMU may include a generalized underlying jump file and application software, where the underlying jump file may be a boot, and the application software may be App (application) software. Generally, BMUs of packs in different production lines correspond to different software packages, that is, BMUs in the same production line correspond to the same software package, while BMUs in different production lines correspond to different software packages.

The plurality of slave host computers 12 are connected one to one with the plurality of burning modules 14, which may be understood as follows: each slave host computer corresponds to a burning module, and each slave host computer and the corresponding burning module may constitute a burning channel. In this way, the plurality of slave host computers 12 are connected one to one with the plurality of burning modules 14 to constitute a plurality of burning channels, so that different products to be burned can be burned in parallel on the basis of the plurality of burning channels.

To further ensure the independence and security of the plurality of burning channels, the plurality of burning modules 14 in the plurality of burning channels may establish a communication connection with the plurality of products to be burned 15 by using different communication methods. In this way, the burning module in each burning channel and the product it is to burn will not be interfered with by other channels during data transmission, thus ensuring the stability of the burning channels.

As an example, the communication mode between the plurality of burning modules 14 and the plurality of products to be burned 15 may be different CAN (Controller Area Network bus, Controller Area Network) communications.

In some embodiments, the master host computer 11 is connected to the plurality of slave host computers 12 by using the same communication mode.

To ensure the consistency between the master host computer 11 and the plurality of slave host computers 12, the same communication mode may be used for the communication between the master host computer 11 and the plurality of slave host computers 12. As an example, the same communication mode adopted between the master host computer 11 and the plurality of slave host computers 12 may be serial port communication.

As shown in FIG. 1, the plurality of slave host computers 12 illustrated in FIG. 1 include three slave host computers, i.e., a first slave host computer 121, a second slave host computer 122, and a third slave host computer 123. The plurality of burning modules 14 illustrated in FIG. 1 include three burning modules, i.e., a first burning module 141, a second burning module 142, and a third burning module 143. The plurality of products to be burned 15 illustrated in FIG. 1 include three products to be burned, i.e., a first product to be burned 151, a second product to be burned 152, and a third product to be burned 153; and the three products to be burned may be different types of BMU components. The first slave host computer 121 and the first burning module 141 form a first burning channel, the second slave host computer 122 and the second burning module 142 form a second burning channel, and the third slave host computer 123 and the third burning module 143 form a third burning channel.

If there are currently three products to be burned, i.e., the first product to be burned 151, the second product to be burned 152, and the third product to be burned 153, then the master host computer 11 may call the three slave host computers, i.e., the first slave host computer 121, the second slave host computer 122, and the third slave host computer 123, to transmit burning data corresponding to the first product to be burned 151 to the first burning module 141 via the first burning channel, and burn the burning data corresponding to the first product to be burned 151 to the first product to be burned 151 by means of the first burning module 141, to transmit burning data corresponding to the second product to be burned 152 to the second burning module 142 via the second burning channel and burn the burning data corresponding to the second product to be burned 152 to the second product to be burned 152 by means of the second burning module 142; and moreover, to transmit burning data corresponding to the third product to be burned 153 to the third burning module 143 via the third burning channel, and burn the burning data corresponding to the third product to be burned 153 to the third product to be burned 153 by means of the third burning module 143. In this way, parallel burning of the three products to be burned, i.e., the first product to be burned 151, the second product to be burned 152, and the third product to be burned 153, is realized.

It should be noted that the number of burning channels may be flexibly set, and may be specifically set and expanded according to the actual business requirements, which is not limited in the embodiments of the present disclosure.

It can be understood that the plurality of slave host computers are connected one to one with the plurality of burning modules to constitute the plurality of burning channels, and parallel burning of BMUs of different products may be realized via the plurality of burning channels; moreover, the communication modes between burning modules and products to be burned in different burning channels are different and will not be interfered with by other channels, thus ensuring the stability of the burning channels.

In some embodiments, the parallel burning system further includes a multi-channel control module 13;
the multi-channel control module 13 is connected between the plurality of slave host computers 12 and the plurality of burning modules 14; and
the multi-channel control module 13 is configured to control the connection and disconnection of the plurality of burning channels.

Here, the multi-channel control module 13 is configured to control the connection and disconnection of the plurality of burning channels that are constituted by the plurality of slave host computer 12 and the plurality of burning modules 14. As an example, the multi-channel control module 13 may be a multi-channel relay board, such as a 16-channel relay board, and a 20-channel relay board.

It should be noted that the multi-channel control module 13 may also be secondarily expanded according to the actual business requirements for the multi-channel control module 13 so as to meet different business requirements. Illustratively, the connection and disconnection of the burning channels may be determined according to the type of products to be welded; if there are three types of products to be welded, then three burning channels may be connected while the rest of the burning channels may be disconnected under the control of the multi-channel control module 13. For another example, it is also possible to determine the connection and disconnection of the burning channels according to the number of products to be welded currently; if the products to be welded are all of the same type and the number of products to be welded is relatively large, welding can be performed in batches, such as four batches, then four burning channels may be connected while the rest of burning channels may be disconnected under the control of the multi-channel control module 13.

In some embodiments, the multi-channel control module 13 includes an adapter module;
the multi-channel control module 13 is configured to control the connection and disconnection in hardware of the plurality of burning modules 14 to the adapter module, and/or to control the connection and disconnection in hardware of the plurality of slave host computers 12 to the adapter module, so as to realize the connection and disconnection of the plurality of burning channels.

Here, the adapter module is configured to realize a hardware connection between the plurality of slave host computers 12 and the plurality of burning modules 14. The process of controlling the connection and disconnection in hardware of the plurality of burning modules 14 to the adapter module, and/or controlling the connection and disconnection in hardware of the plurality of slave host computers 12 to the adapter module includes the following three cases: in a first case, controlling the connection and disconnection in hardware of the plurality of burning modules 14 to the adapter module; in a second case, controlling the connection and disconnection in hardware of the plurality of slave host computers 12 to the adapter module; and in a third case, controlling the connection and disconnection in hardware of the plurality of burning modules 14 and the plurality of slave host computers 12 to the adapter module.

In the first case described above, the hardware connection between the plurality of slave host computers 12 and the adapter module may be kept all the time, and the hardware connection between the adapter module and the plurality of burning modules 14 may be adjustable. In this way, it is possible to control the connection and disconnection in hardware of the adapter module to the plurality of burning modules 14 so as to realize the connection and disconnection of the plurality of burning channels.

In the second case described above, the hardware connection between the adapter module and the plurality of burning modules 14 may be kept all the time, and the hardware connection between the plurality of slave host computers 12 and the adapter module may be adjustable. In this way, it is possible to control the connection and disconnection in hardware of the plurality of slave host computers 12 to the adapter module so as to realize the connection and disconnection of the plurality of burning channels.

In the third case described above, the hardware connection between the plurality of slave host computers 12 and the adapter module may be adjustable, and the hardware connection between the adapter module and the plurality of burning modules 14 may also be adjustable. In this way, it is possible to realize the connection and disconnection of the plurality of burning channels by controlling the connection and disconnection in hardware of the plurality of slave host computers 12 to the adapter module. Moreover, it is also possible to realize the connection and disconnection of the plurality of burning channels by controlling the connection and disconnection in hardware of the adapter module to the plurality of burning modules 14.

In an embodiment, the adapter module includes a first group of adapters and a second group of adapters;
the first group of adapters are connected to the plurality of slave host computers 12, and the second group of adapters are connected to the plurality of burning modules 14; and
the number of adapters in the first group of adapters, the number of adapters in the second group of adapters, the number of slave host computers 12, and the number of burning modules 14 are the same.

Here, after the first group of adapters in the multi-channel control module 13 are connected to the plurality of slave host computers 12 and the second group of adapters in the multi-channel control module 13 are connected to the plurality of burning modules 14, the hardware connection between the plurality of slave host computers 12 and the plurality of burning modules 14 is realized. In this way, it is possible to realize the connection and disconnection of the plurality of burning channels by controlling the connection and disconnection in hardware of the first group of adapters to the plurality of slave host computers 12; and it is possible to realize the connection and disconnection of the plurality of burning channels by controlling the connection and disconnection in hardware of the second group of adapters to the plurality of burning modules 14. Moreover, the number of adapters in the first group of adapters, the number of adapters in the second group of adapters, the number of slave host computers 12, and the number of burning modules 14 are the same to realize a one-to-one connection between the plurality of slave host computers 12 and the plurality of burning modules 14.

The multi-channel control module 13 is illustrated with a 16-channel relay board as an example. FIG. 2 is a schematic structural diagram of a 16-channel relay board according to an embodiment of the present disclosure. As shown in FIG. 2, a main board 21 of the 16-channel relay board 20 is provided with 16 interfaces, including 8 interfaces on the left side and 8 interfaces on the right side. The 8 interfaces on the left side are connected to the first group of adapters 22, and the 8 interfaces on the right side are connected to the second group of adapters 23; the first group of adapters 22 are connected to the plurality of slave host computers 12, and the second group of adapters 23 are connected to the plurality of burning modules 14. In this way, it is possible to realize the connection and disconnection of the plurality of burning channels that are constituted by the plurality of slave host computers 12 and the plurality of burning modules 14 by controlling the 16-channel relay board 20. In addition, the 16-channel relay board 20 may further include a power supply 24, and the power supply 24 is used for supplying power to the 16-channel relay board 20.

It can be understood that the connection and disconnection in hardware of the plurality of burning channels can be realized quickly and accurately by means of the adapter module.

In an embodiment, the multi-channel control module 13 is further configured to distribute power to the plurality of burning modules 14. In this way, the power demand of the plurality of burning modules 14 can be guaranteed.

It can be understood that by means of the multi-channel control module, connection and disconnection of the plurality of burning channels may be realized, so that the plurality of burning channels can be adjusted in real time according to the business requirements and the waste of resources can be reduced.

In some embodiments, the parallel burning system further includes a verification module 17; and
the verification module 17 is configured to perform data verification on the plurality of products to be burned 15 during the processing of the plurality of products to be burned 15.

Here, the verification module 17 is configured to verify data during the burning process, avoiding data confusion, product misalignment and other abnormalities in the parallel burning process, thus ensuring the accuracy of parallel burning. Illustratively, the verification module 17 may be a component-grouping fool-proof verification system that may be used to verify not only the data during the burning process, but also the assembled finished packs, where the finished packs may refer to packs obtained by assembling a plurality of BMU components in the same production line.

In some embodiments, the parallel burning system further includes a burning file management system 16;
the burning file management system 16 is deployed on a computer device other than the master host computer 11, and establishes a communication connection with the master host computer 11; and
the burning file management system 16 is configured to store data corresponding to the plurality of products to be burned 15.

Here, the burning file management system 16 is configured to manage data during the burning process. As an example, the burning file management system 16 may be an MES (Manufacturing Execution System), or a PLM (Product Lifecycle Management) system. It should be noted that the burning file management system 16 is deployed on a computer device other than the master host computer 11 in order to further improve data security.

It can be understood that the setting of a separate burning file management system may facilitate the unified management of data during the burning process.

It should be noted that for different production lines, due to the limited space size and layout, there are generally only one or two burning stations, which cannot be expanded. Therefore, according to the present disclosure, a separate burning station may be set so that burning with one station corresponding to a plurality of production lines is realized. After the burning is completed, the burned BMUs are transported back to the production line for BMU assembly by a transportation tool.

An embodiment of the present disclosure provides a parallel burning method. The method may be performed by means of the master host computer 11 in the parallel burning system. As shown in FIG. 3, the method includes the following steps 301 to 303.

Step 301: determining, based on product numbers of a plurality of products to be burned 15, multiple pieces of burning data corresponding to the plurality of products to be burned 15.

Here, the plurality of products to be burned 15 may refer to BMUs from different production lines. A product number of a product to be burned is used to uniquely identify this product to be burned. Illustratively, the product number of the product to be burned may be a PN (Product Number) of a BMU. The burning data may include, but is not limited to, a general underlying jump file boot, and App software corresponding to the product to be burned.

It should be noted that since BMUs on the same production line correspond to the same burning data, and the BMUs on the same production line are used to be assembled into the same type of packs (Pack), the burning data may be obtained according to PNs of the BMUs, and the burning data may also be obtained according to PNs of the packs.

In a feasible implementation, burning data corresponding to each product to be burned may be pre-stored in accordance with the product number. In this way, after the plurality of products to be burned 15 are obtained, the burning data corresponding to the plurality of products to be burned 15 can be quickly determined on the basis of the product numbers of the plurality of products to be burned 15, and thus, multiple pieces of burning data are obtained.

In an embodiment, in the case that the parallel burning system includes a burning file management system 16, the specific implementation of the step 301 may include: scanning graphic identifiers on the plurality of products to be burned 15 to obtain product numbers of the plurality of products to be burned 15; and based on the product numbers of the plurality of products to be burned 15, obtaining, from the burning file management system 16, multiple pieces of burning data corresponding to the plurality of products to be burned 15.

Here, a graphic identifier is adhered to a product to be burned; the graphic identifier is used to store data of the product to be burned; and the graphic identifier may be a graphical code, a barcode, a two-dimensional code, and the like. Illustratively, the graphic identifier of a BMU may store the PN of the BMU, and the PN of the corresponding Pack.

Generally, the burning data corresponding to the product to be burned belongs to confidential data, so it needs to be stored in the burning file management system 16 with high confidentiality, which may ensure the security of the burning data. In this case, a graphic code on each product to be burned may be scanned to obtain a product number of each product to be burned. Based on the PN of each product to be burned, burning data corresponding to each of the plurality of products to be burned 15 can be obtained from the burning file management system 16, and thus, multiple pieces of burning data are obtained.

Step 302: calling the plurality of slave host computers 12 to transmit the multiple pieces of burning data to the plurality of burning modules 14 via a plurality of burning channels constituted after the plurality of slave host computers 12 are connected one to one with the plurality of burning modules 14.

In a feasible implementation, after a communication connection between the master host computer 11 and the plurality of slave host computers 12 is established using serial communication, the master host computer 11 may call the plurality of slave host computers 12 to send the burning of each product to be burned to the plurality of slave host computers 12 as a single burning task.

Step 303: establishing a connection between the plurality of burning modules 14 and the plurality of products to be burned 15 by using different communication modes, and burning the multiple pieces of burning data in parallel by means of the plurality of burning modules 14 to the plurality of products to be burned 15.

Here, the burning module may refer to a burner. In a feasible implementation, after a communication connection between a plurality of burners (the plurality of burning modules 14) and the plurality of products to be burned 15 is established using different can cards, multiple app software can be burned in parallel to the plurality of products to be burned 15 by means of the plurality of burners.

In an embodiment, the specific implementation of "burning the multiple pieces of burning data in parallel by means of the plurality of burning modules 14 to the plurality of products to be burned 15" in the step 303 may include: determining preset burning items and burning steps corresponding to each of the plurality of products to be burned 15; and in accordance with the burning items and the burning steps, burning the multiple pieces of burning data in parallel by means of the plurality of burning modules 14 to the plurality of products to be burned 15.

Here, the burning items may characterize basic data for each product to be burned; for example, the burning items may include, but are not limited to, data such as burning name, burning order, burning result, and the number of times of burning for each product to be burned. The burning steps may indicate steps of burning for each product to be burned.

FIG. 4 is an interface diagram of burning items according to an embodiment of the present disclosure. A first table header 41 of burning items 40 illustrated in FIG. 4 includes six columns of row number, check box, burning item name, burning order, burning result, and number of times of burning. The burning items 40 illustrated in FIG. 4 include five burning items, burning item 1, burning item 2, burning item 3, burning item 4, and burning item 5; and each burning item may refer to a product to be burned. The burning order of both burning item 2 and burning item 3 is 2, indicating that burning item 2 and burning item 3 are burned in parallel; the burning order of burning item 4 and burning item 5 are 4 and 5, respectively, indicating that burning item 4 and burning item 5 are burned in serial. In addition, multiple first options 42 are provided on the interface of the burning items 40. The multiple first options 42 may include options of add, delete, shift up, shift down, parallelize, sort, edit, parameter reset, and the like. The add option is used for adding a new burning item, the delete option is used for deleting the edited burning item, the shift up option and the shift down option are both used for changing the order of the edited burning item, the parallelize option is used for setting the burning items to be burned in parallel, the edit option is used for making modifications to the edited burning item, and the parameter reset option is used for resetting the parameters in the edited burning item.

FIG. 5 is an interface diagram of burning steps according to an embodiment of the present disclosure. A second table header 51 of burning steps 50 illustrated in FIG. 5 includes five columns of row number, burning step name, type, pre-delay, and post-delay. The burning steps 50 illustrated in FIG. 5 include: 1. opening Ini file path 1; 2. calling slave host computers; 3. burning boot; 4. burning app software; and 5. turning off the slave host computers. The type of each burning step may also be set. The type of Ini file path 1 is Ini. The pre-delay corresponding to each burning step may be X1, and the post-delay corresponding to each burning step may be X2. In addition, multiple second options 52 are provided on the interface of the burning steps 50; the multiple second options 52 may include options such as add, delete, shift up, shift down, parallelize, sort, edit, parameter reset, and the like.

In a feasible implementation, for different products to be burned, different burning items and burning steps may be set. in this way, after a burning task is started, the products to be burned may be burned in accordance with the preset burning items and burning steps. In this way, presetting the burning items and burning steps corresponding to the products to be burned facilitates the burning of the products to be burned; furthermore, according to the burning items and burning steps, it is also possible to realize customized burning, thus improving the applicability.

It can be understood that parallel burning of BMUs of different packs can be realized via the plurality of burning channels; moreover, the communication modes between burning modules and products to be burned in different burning channels are different and will not be interfered with by other channels, thus ensuring the stability of the burning channels.

In some embodiments, after the multiple pieces of burning data are obtained, the multiple pieces of burning data need to be verified, and then, the above step 302 may be implemented by the following steps 3021 to 3024:

Step 3021: determining first data identifiers of the multiple pieces of burning data obtained from the burning file management system 16.

Here, the first data identifier may refer to a data identifier of the burning data obtained from the burning file management system 16. The data identifier of burning data is used to uniquely identify this burning data. Illustratively, if the burning data includes boot and App software, then the data identifier may include a boot version number and an App software version number.

Step 3022: determining a pre-stored first corresponding relationship between products to be burned and burning data.

Here, the first corresponding relationship may refer to a pre-stored corresponding relationship between the products to be burned and the burning data. The first corresponding relationship is used for verifying the multiple pieces of burning data obtained from the burning file management system 16.

Step 3023: performing a first verification on the multiple pieces of burning data on the basis of the first corresponding relationship and the first data identifiers of the multiple pieces of burning data.

Here, the first verification may refer to verifying the multiple pieces of burning data obtained from the burning file management system 16.

In a feasible implementation, the product number of each burning data may be used to determine a second data identifier of each burning data from the first corresponding relationship; the second data identifier of each burning data is then compared with the first data identifier of each burning data to realize the first verification on each burning data.

In an embodiment, the specific implementation of the step 3023 may specifically include: determining, based on the product number of each product to be burned, a second data identifier of the product to be burned from the first corresponding relationship ; determining a first verification result indicating a successful verification when the first data identifier of the product to be burned matches the second data identifier of the product to be burned; determining a first verification result that indicates a failed verification when the first data identifier of the product to be burned does not match the second data identifier of the product to be burned.

Here, the second data identifier refers to a data identifier of the product to be burned that is determined from the first corresponding relationship pre-stored in the master host computer 11. The first data identifier of each product to be burned matches the second data identifier of the product to be burned, which may refer to that the first data identifier of each product to be burned is the same as the second data identifier of the product to be burned. The first data identifier of each product to be burned does not match the second data identifier of the product to be burned, which may refer to that the first data identifier of each product to be burned is different from the second data identifier of the product to be burned.

In a feasible implementation, when the first data identifier of each product to be burned is the same as the second data identifier of the product to be burned, a first verification result that indicates a successful verification is determined; and when the first data identifier of each product to be burned is different from the second data identifier of the product to be burned, a first verification result that indicates a successful verification is determined.

It can be understood that the first data identifier of the burning data obtained from the burning file management system matches the second data identifier of the burning data obtained from the first corresponding relationship pre-stored in the master host computer to determine the first verification result, which may prevent errors in the burning data and ensure the accuracy of the burning data.

Step 3024: in the case of the first verification result indicating a successful verification, calling the plurality of slave host computers 12 to transmit the multiple pieces of burning data to the plurality of burning modules via the plurality of burning channels 14.

Here, the plurality of slave host computers 12 are called for burning only when the first verification result indicates that all of the multiple pieces of burning data are verified successfully, which may avoid a situation in which an error in the burning data leads to a failure of the subsequent burning data to cause the waste of resources.

It can be understood that the first corresponding relationship between the products to be burned and the burning data is pre-stored in the master host computer, which may facilitate the verification of the multiple pieces of burning data obtained from the burning file management system to ensure the accuracy of parallel burning.

Based on the foregoing embodiments, after the burning is completed, the plurality of burned products pulled back to the production line may also be subjected to verification, which may be implemented by the following steps 304 to 305:

Step 304: performing a second verification on the plurality of burned products 15 before assembling the plurality of burned products 15.

Here, the second verification may refer to verifying the burned products to prevent product misalignment due to transportation errors in the process of transporting the plurality of burned products 15 back to their respective production lines.

In a feasible implementation, a corresponding relationship between the products to be burned and the corresponding packs may be stored during burning. In this way, the second verification of the plurality of burned products may be carried out according to the corresponding relationship between the products to be burned and the corresponding packs after the plurality of burned products are transported to an assembly station, but before they are assembled.

Step 305: in the case of a second verification result indicating a successful verification, assembling the plurality of burned products 15 to obtain a plurality of packs.

Here, the plurality of packs may refer to finished packs obtained after assembling of the plurality of burned products 15.

Assembling the plurality of burned products 15 in the case of the second verification result indicating a successful verification can prevent BMUs in other production lines from being mixed into the current production line, thus ensuring the quality of the packs, and improving the pass rate of the packs.

In some embodiments, the above step 304 may be implemented by the following steps 3041 to 3043:
Step 3041: obtaining a second corresponding relationship between the products to be burned and the packs that is stored during burning.

Here, the second corresponding relationship indicates a correlation between the products to be burned and the packs. For example, the second corresponding relationship may be a corresponding relationship between the PN of the BMU, the serial number of the BMU, and the PN of the Pack. The serial number of the BMU may contain data such as production company, production year, month and week, hardware version information, flow information, and the like.

In a feasible implementation, the second corresponding relationship between the products to be burned and the packs may be manually stored into the master host computer 11 during burning; and then stored to the burning file management system 16 via the master host computer 11.

Step 3042: scanning graphic identifiers of the plurality of burned products 15 to obtain product numbers of the plurality of burned products 15, and battery identifiers of the packs respectively corresponding to the plurality of burned products 15.

In a feasible implementation, the graphic code on a BMU may be scanned to obtain the PN of the BMU and the PN of the corresponding Pack.

Step 3043: performing a second verification on the plurality of burned products 15 on the basis of the product numbers of the plurality of burned products 15, the battery identifiers respectively corresponding to the plurality of burned products 15, and the second corresponding relationship.

In a feasible implementation, the PN of the BMU scanned in real time and the PN of the corresponding Pack (real-time data) may be compared with the second corresponding relationship stored during burning, so that the second verification may be performed on the plurality of burned products 15. In this way, it is possible to determine whether there is any abnormality such as data mismatch, missing, misalignment, or the like in the BMUs on the current production line.

In some embodiments, the specific implementation of the step 3043 may include determining a second verification result that indicates a successful verification when the product numbers of the plurality of burned products 15 and the battery identifiers respectively corresponding to the plurality of burned products 15 match the second corresponding relationship; and determining a second verification result that indicates a failed verification when the product numbers of the plurality of burned products 15 and the battery identifiers respectively corresponding to the plurality of burned products 15 do not match the second corresponding relationship.

Here, the product numbers of the plurality of burned products 15 and the battery identifiers respectively corresponding to the plurality of burned products 15 match the second corresponding relationship, indicating that the PN of a BMU scanned in real time and the PN of the corresponding Pack (the real-time data) are the same as the data in the second corresponding relationship stored during burning; in such a case, the second verification result indicating a successful verification is determined. The product numbers of the plurality of burned products 15 and the battery identifiers respectively corresponding to the plurality of burned products 15 do not match the second corresponding relationship, indicating that the PN of a BMU scanned in real time and the PN of the corresponding Pack (real-time data) are different from the data in the second corresponding relationship stored during burning; in such a case, the second verification result indicating a failed verification is determined.

In a feasible implementation, with the PN of the BMU scanned in real time, a corresponding relationship of the PN of the BMU may be determined from the second corresponding relationship; with the PN of the Pack scanned in real time, a corresponding relationship of the PN of the Pack maybe determined from the second corresponding relationship; and it may be determined whether or not the corresponding relationship of the PN of the BMU is the same as that of the PN of the Pack, and if the corresponding relationships are the same, the verification is successful, and if they are different, then the verification is failed.

Based on the foregoing embodiments, after the plurality of burned products 15 are assembled to obtain the plurality of packs, the plurality of packs may also be subjected to verification, which may be implemented by the following steps 306 to 308:
Step 306: determining a pre-stored first corresponding relationship between products to be burned and burning data.

Here, the first corresponding relationship is a corresponding relationship between the products to be burned and the burning data that is pre-stored in the master host computer 11.

Step 307: performing a third verification on the products to be burned in the plurality of packs on the basis of data identifiers of the burning data corresponding to the products to be burned in the plurality of packs and the first corresponding relationship.

Here, the data identifier of the burning data corresponding to the product to be burned in the pack may refer to the version numbers of the boots and the App software corresponding to the BMU in the finished pack. The third verification is used to verify whether the burning data of the BMUs in the packs is correct.

In a feasible implementation, a graphic code of each product to be burned in a pack may be scanned to obtain a product number of each product to be burned in the pack; based on a third product number of each product to be burned in the pack, a fourth data identifier of each product to be burned in the pack may be determined from the first corresponding relationship; when the third data identifier matches the fourth data identifier, a third verification result that indicates a successful verification is determined; when the third data identifier does not match the fourth data identifier, a third verification result that indicates a failed verification is determined. In this way, the pack is verified twice to verify the correctness of versions of the boot and app software so that the quality of the pack is further ensured.

Step 308: in the case of the third verification indicating a successful verification, performing a performance test on the plurality of packs.

Here, the performance test may refer to EOL (End of line) testing. In a feasible implementation, EOL testing may also be performed on the finished packs to ensure the performance of the packs.

In an embodiment, by the verification module 17, data verification may be performed on the plurality of products to be burned 15 during the processing of the plurality of products to be burned 15; and the data verification includes a first verification, a second verification, and a third verification.

It should be noted that the verification module 17 may refer to a component-grouping fool-proof verification system. The verification module 17 may be deployed in the master host computer 11, or may be deployed on the same computer device as the MES, or may be deployed in different work stations such as a burning station, and an assembly station, respectively. The embodiments of the present disclosure are not limited thereto.

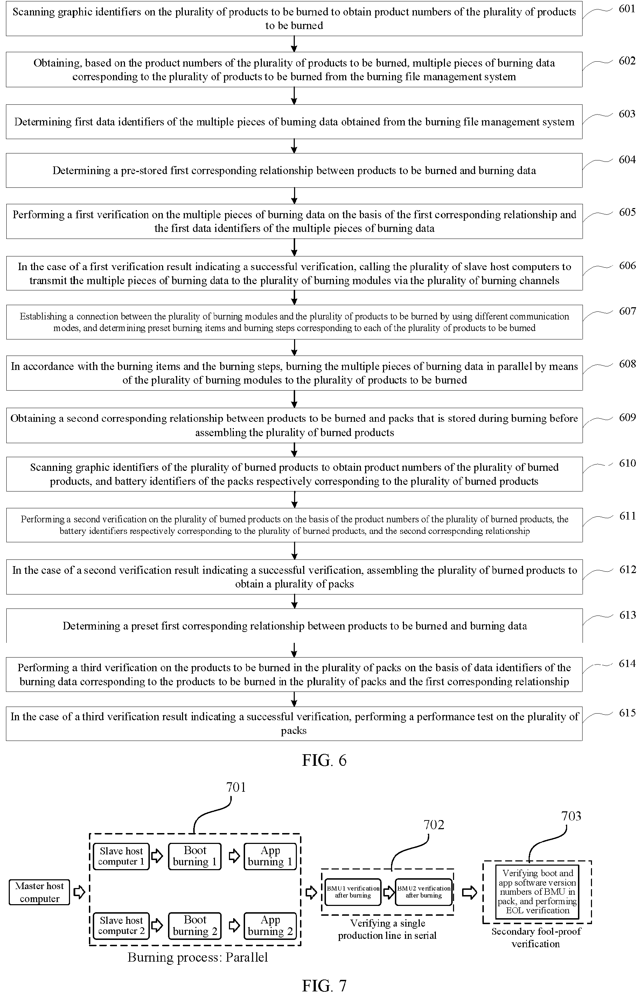

An embodiment of the present disclosure provides another parallel burning method, which may be executed by the master host computer 11. As shown in FIG. 6, the method includes the following steps 601 to 615:
Step 601: scanning graphic identifiers on the plurality of products to be burned to obtain the product numbers of the plurality of products to be burned.
Step 602: obtaining, based on the product numbers of the plurality of products to be burned, multiple pieces of burning data corresponding to the plurality of products to be burned from the burning file management system.
Step 603: determining first data identifiers of the multiple pieces of burning data obtained from the burning file management system.
Step 604: determining a pre-stored first corresponding relationship between products to be burned and burning data.
step 605: performing a first verification on the multiple pieces of burning data on the basis of the first corresponding relationship and the first data identifiers of the multiple pieces of burning data.
Step 606: in the case of the first verification result indicating a successful verification, calling the plurality of slave host computers to transmit the multiple pieces of burning data to the plurality of burning modules via the plurality of burning channels.
Step 607: establishing a connection between the plurality of burning modules and the plurality of products to be burned by using different communication modes, and determining preset burning items and burning steps corresponding to each of the plurality of products to be burned.
Step 608: in accordance with the burning items and the burning steps, burning the multiple pieces of burning data in parallel by means of the plurality of burning modules to the plurality of products to be burned.
Step 609: obtaining a second corresponding relationship between the products to be burned and the packs that is stored during burning.
Step 610: scanning graphic identifiers of the plurality of burned products to obtain product numbers of the plurality of burned products, and battery identifiers of the packs respectively corresponding to the plurality of burned products.
Step 611: performing a second verification on the plurality of burned products on the basis of the product numbers of the plurality of burned products, the battery identifiers respectively corresponding to the plurality of burned products, and the second corresponding relationship.
Step 612: in the case of a second verification result indicating a successful verification, assembling the plurality of burned products to obtain a plurality of packs.
Step 613: determining a pre-stored first corresponding relationship between products to be burned and burning data.
Step 614: performing a third verification on the products to be burned in the plurality of packs on the basis of data identifiers of the burning data corresponding to the products to be burned in the plurality of packs and the first corresponding relationship.
Step 615: in the case of a third verification result indicating a successful verification, performing a performance test on the plurality of packs.

The following describes the application of the parallel burning system according to the embodiments of the present disclosure in a practical scenario.

An embodiment of the present disclosure provides a parallel burning system, with the system function implementation logic as below:
1.1 A software package corresponding to a BMU component of each Pack is bound and published in the MES (or PLM system) through the PN of the Pack.
1.2 The master host computer scans a graphic code on the BMU to obtain the PN of the Pack; it calls an interface of the MES and automatically downloads the software packages on the MES through the PN of the Pack; it verifies the App software and the version numbers of the boot in the software package according to the PN of the Pack; and after a successful verification, it calls the slave host computers to perform burning of the boot and the App software. When burning, the boot is burned first, and then the App software is burned after an underlaying jump.
1.3 A Multi-channel relay module performs power distribution and control on N BMUs while calling different CAN cards to burn the BMUs.
1.4 The burned BMU components may be returned to a Pack production line for BMU assembly. As the BMUs may not correspond to the production line due to misoperation during transportation and when they are put back manually to the production line, code scanning for grouping fool-proof verification is performed during assembly.

The specific implementation of the grouping fool-proof verification (which may be done by the master host computer 11 or by an equipment station) may include: 1. determining a corresponding relationship (the second corresponding relationship) between the serial number of the BMU, the PN of the Pack, and the PN of the BMU that are stored to the master host computer 11 during burning; 2. scanning a barcode on the BMU to obtain the PN of the BMU and the serial number of the BMU, and scanning a barcode on the Pack to obtain the PN of the Pack; 3. obtaining the corresponding relationship stored in the master host computer 11 according to the PN of the Pack, and obtaining the corresponding relationship stored in the master host computer 11 according to the serial number of the BMU (or the PN of the BMU); 4. comparing the corresponding relationship obtained according to the PN of the Pack with the corresponding relationship obtained according to the serial number of the BMU (or the PN of the BMU), the verification is succeed if the data of both are the same, and the verification is failed if the data of both are different.
1.5 The finished pack is verified twice for the correctness of product boot, app software version, and is subjected to the EOL testing.

### 2 Multi-channel burning design solution

FIG. 7 is a flow chart of implementation of yet another parallel burning method according to an embodiment of the present disclosure. Two burning channels are illustrated as an example: In step 701, the master host computer 11 simultaneously calls two slave host computers, i.e., a slave host computer 1 and a slave host computer 2, to carry out a burning process of the two burning channels in parallel; specifically, app software burning is performed after the boot burning. In step 702, after the burning is completed, the burned BMUs in a single production line are verified in serial; for example, BMU1 in a single production line is verified first, and then BMU2 in a single production line is verified; In step 703, after a Pack is assembled, a secondary fool-proof verification is performed; specifically, the boot version number and the App software version number corresponding to the BMU in the Pack are verified, and the pack is subjected to an EOL verification.

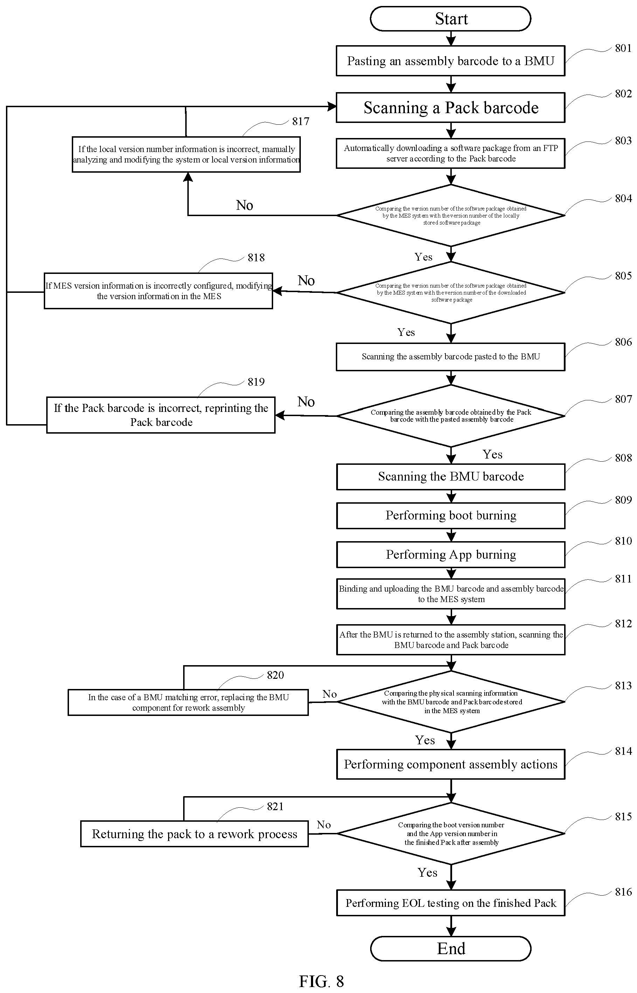

FIG. 8 is a flow chart of implementation of still another parallel burning method according to an embodiment of the present disclosure. The method includes the following steps 801 to 821:

Step 801: pasting an assembly barcode to a BMU.

Here, the assembly barcode may refer to a product number that is uniformly certified by the market. The PN of the BMU may be stored in the assembly barcode.

Step 802: scanning a Pack barcode.

Here, the PN of the Pack may be stored in the Pack barcode. The same production line is used to produce packs of the same type, and the BMUs in the packs of the same type correspond to the same software package, so the PN of the Pack can be obtained by scanning the Pack barcode, and then the software package corresponding to the BMU can be obtained according to the PN of the Pack.

Step 803: automatically downloading the software package from an FTP server according to the Pack barcode.

Here, software packages corresponding to the BMUs in different packs are pre-released in the PLM system in the FTP server, so that the software package corresponding to this BMU can be automatically downloaded from the FTP server according to the PN of the Pack obtained by scanning the Pack barcode.

Step 804: comparing the version number of the software package obtained by the MES with the version number of the locally stored software package; in the case of a successful comparison, performing step 805; in the case of a failed comparison, performing step 817.

Here, the MES also stores software packages corresponding to BMUs in different packs, so that the version information of the software packages may be compared to ensure the accuracy of the software packages.

Step 805: comparing the version number of the software package obtained by the MES with the version number of the downloaded software package; in the case of a successful comparison, performing step 806; in the case of a failed comparison, performing step 818.

Step 806: scanning the assembly barcode pasted to the BMU.

Step 807: comparing the assembly barcode obtained by the Pack barcode with the pasted assembly barcode; in the case of a successful comparison, performing step 808; in the case of a failed comparison, performing step 819.

Step 808: scanning the BMU barcode.

Step 809: performing boot burning.

Step 810: performing App burning.

Step 811: binding and uploading the BMU barcode and assembly barcode to the MES.

Step 812: after the BMU is returned to the assembly station, scanning the BMU barcode and Pack barcode.

Step 813: comparing the physical scanning information with the BMU barcode and Pack barcode stored in the MES; in the case of a successful comparison, performing step 814; in the case of a failed comparison, performing step 820.

Step 814: performing component assembly actions.

Step 815: comparing the boot version number and the App version number in the finished Pack after assembly; in the case of a successful comparison, performing step 816; in the case of a failed comparison, performing step 821.

Step 816: performing EOL testing on the finished Pack.

Step 817: if the local version number information is incorrect, manually analyzing and modifying the system or local version information.

Step 818: if MES version information is incorrectly configured, modifying the version information in the MES.

Step 819: if the Pack barcode is incorrect, reprinting the Pack barcode.

Step 820: in the case of a BMU matching error, replacing the BMU component for rework assembly.

Step 821: returning the pack to a rework process.

### Industrial applicability

In the embodiments of the present disclosure, the multi-channel parallel burning system with a master-slave dual-layer architecture may implement parallel burning of BMUs of different products; moreover, the burning modules are in communication with products to be burned by using different communication modes in different burning channels, and will not be interfered with by other channels, thus ensuring the stability of the burning channels.

## Claims

1. A parallel burning system, comprising a master host computer (11), a plurality of slave host computers (12), and a plurality of burning modules (14); wherein:
the master host computer (11) is connected to the plurality of slave host computers (12);
the plurality of slave host computers (12) are connected one to one with the plurality of burning modules (14), constituting a plurality of burning channels;
the plurality of burning modules (14) are connected to a plurality of products to be burned (15) by using different communication modes in the plurality of burning channels; and
the master host computer (11) is used to:
call the plurality of slave host computers (12) to transmit multiple pieces of burning data corresponding to the plurality of products to be burned (15) to the plurality of burning modules (14) via the plurality of burning channels; and
burn the multiple pieces of burning data in parallel by means of the plurality of burning modules (14) to the plurality of products to be burned (15).

2. The system according to claim 1, wherein the system further comprises a multi-channel control module (13);
the multi-channel control module (13) is connected between the plurality of slave host computers (12) and the plurality of burning modules (14); and
the multi-channel control module (13) is configured to control connection and disconnection of the plurality of burning channels.

3. The system according to claim 2, wherein the multi-channel control module (13) comprises an adapter module; and
the multi-channel control module (13) is configured to control connection and disconnection in hardware of the plurality of burning modules (14) to the adapter module, and/or to control connection and disconnection in hardware of the plurality of slave host computers (12) to the adapter module, so as to realize the connection and disconnection of the plurality of burning channels.

4. The system according to claim 3, wherein the adapter module comprises a first group of adapters (22) and a second group of adapters (23);
the first group of adapters (22) are connected to the plurality of slave host computers (12), and the second group of adapters (23) are connected to the plurality of burning modules (14); and
the number of adapters in the first group of adapters (22), the number of adapters in the second group of adapters (23), the number of the slave host computers (12), and the number of the burning modules (14) are the same.

5. The system according to any one of claims 2 to 4, wherein the multi-channel control module (13) is further configured to distribute power to the plurality of burning modules (14).

6. The system according to any one of claims 1 to 4, wherein the system further comprises a verification module (17); and the verification module (17) is configured to perform data verification on the plurality of products to be burned (15) during processing of the plurality of products to be burned (15); or
wherein the system further comprises a burning file management system (16);
the burning file management system (16) is deployed on a computer device other than the master host computer (11), and establishes a communication connection with the master host computer (11); and
the burning file management system (16) is configured to store data corresponding to the plurality of products to be burned (15).

7. The system according to any one of claims 1 to 4, wherein the master host computer (11) is connected to the plurality of slave host computers (12) by using the same communication mode; or
wherein each product to be burned is a battery management unit, BMU, of a pack, and burning data corresponding to each BMU contains an underlying jump file and application software.

8. A parallel burning method applied to a master host computer (11) in a parallel burning system, the system further comprising a plurality of slave host computers (12) and a plurality of burning modules (14), the method comprising:
determining, based on product numbers of a plurality of products to be burned (15), multiple pieces of burning data corresponding to the plurality of products to be burned (15);
calling the plurality of slave host computers (12) to transmit the multiple pieces of burning data to the plurality of burning modules (14) via a plurality of burning channels constituted after the plurality of slave host computers (12) are connected one to one with the plurality of burning modules (14); and
establishing a connection between the plurality of burning modules (14) and the plurality of products to be burned (15) by using different communication modes in the plurality of burning channels, and burning the multiple pieces of burning data in parallel by means of the plurality of burning modules (14) to the plurality of products to be burned (15).

9. The method according to claim 8, wherein the system further comprises a burning file management system (16);
the determining, based on product numbers of a plurality of products to be burned (15), multiple pieces of burning data corresponding to the plurality of products to be burned (15) comprises:
scanning graphic identifiers on the plurality of products to be burned (15) to obtain the product numbers of the plurality of products to be burned (15); and
obtaining, based on the product numbers of the plurality of products to be burned (15), multiple pieces of burning data corresponding to the plurality of products to be burned (15) from the burning file management system (16).

10. The method according to claim 9, wherein the calling the plurality of slave host computers (12) to transmit the multiple pieces of burning data to the plurality of burning modules (14) via a plurality of burning channels constituted after the plurality of slave host computers (12) are connected one to one with the plurality of burning modules (14) comprises:
determining first data identifiers of the multiple pieces of burning data obtained from the burning file management system (16);
determining a pre-stored first corresponding relationship between products to be burned and burning data;
performing a first verification on the multiple pieces of burning data on the basis of the first corresponding relationship and the first data identifiers of the multiple pieces of burning data; and
in the case of a first verification result indicating a successful verification, calling the plurality of slave host computers (12) to transmit the multiple pieces of burning data to the plurality of burning modules (14) via the plurality of burning channels;
wherein preferably, the performing a first verification on the multiple pieces of burning data on the basis of the first corresponding relationship and the first data identifiers of the multiple pieces of burning data comprises:
determining, based on the product identifier of each product to be burned, a second data identifier of each product to be burned from the first corresponding relationship;
determining a first verification result that indicates a successful verification when the first data identifier of each product to be burned matches the second data identifier of the product to be burned; and
determining a first verification result that indicates a failed verification when the first data identifier of each product to be burned does not match the second data identifier of the product to be burned.

11. The method according to any one of claims 9 or 10, wherein the burning the multiple pieces of burning data in parallel by means of the plurality of burning modules (14) to the plurality of products to be burned (15) comprises:
determining preset burning items (40) and burning steps (50) corresponding to each of the plurality of products to be burned (15); and
in accordance with the burning items (40) and the burning steps (50), burning the multiple pieces of burning data in parallel by means of the plurality of burning modules (14) to the plurality of products to be burned (15).

12. The method according to any one of claims 9 or 10, wherein the method further comprises:
performing a second verification on a plurality of burned products before assembling the plurality of burned products; and
in the case of a second verification result indicating a successful verification, assembling the plurality of burned products to obtain a plurality of packs,
wherein preferably, the performing a second verification on the plurality of burned products comprises:
obtaining a second corresponding relationship between products to be burned and packs that is stored during burning;
scanning graphic identifiers of the plurality of burned products to obtain product numbers of the plurality of burned products, and battery identifiers of the packs respectively corresponding to the plurality of burned products; and
performing the second verification on the plurality of burned products on the basis of the product numbers of the plurality of burned products, the battery identifiers respectively corresponding to the plurality of burned products, and the second corresponding relationship.

13. The method according to claim 12, wherein the performing the second verification on the plurality of burned products on the basis of the product numbers of the plurality of burned products, the battery identifiers respectively corresponding to the plurality of burned products, and the second corresponding relationship comprises:
determining a second verification result that indicates a successful verification when the product numbers of the plurality of burned products and the battery identifiers respectively corresponding to the plurality of burned products match the second corresponding relationship; and
determining a second verification result that indicates a failed verification when the product numbers of the plurality of burned products and the battery identifiers respectively corresponding to the plurality of burned products do not match the second corresponding relationship.

14. The method according to claim 12, wherein the method further comprises:
determining a pre-stored first corresponding relationship between products to be burned and burning data;
performing a third verification on the products to be burned in the plurality of packs on the basis of data identifiers of the burning data corresponding to the products to be burned in the plurality of packs and the first corresponding relationship; and
in the case of a third verification result indicating a successful verification, performing a performance test on the plurality of packs.

15. The method according to claim 8, wherein the system further comprises a verification module (17); and the method further comprises:
performing, by the verification module (17), data verification on the plurality of products to be burned (15) during processing of the plurality of products to be burned (15), wherein the data verification comprises a first verification, a second verification, and a third verification.

## Patentansprüche

1. Paralleles Brennsystem, das einen Master-Host-Computer (11), mehrere Slave-Host-Computer (12) und mehrere Brennmodule (14) umfasst; wobei:
der Master-Host-Computer (11) mit den mehreren Slave-Host-Computern (12) verbunden ist;
die mehreren Slave-Host-Computer (12) eins zu eins mit den mehreren Brennmodulen (14) verbunden sind und so mehrere Brennkanäle bilden;
die mehreren Brennmodule (14) mittels unterschiedlicher Kommunikationsmodi in den mehreren Brennkanälen mit mehreren zu brennenden Produkten (15) verbunden sind; und
der Master-Host-Computer (11) dient zum:
Auffordern der mehreren Slave-Host-Computer (12), mehrere Brenndatenelemente entsprechend den mehreren zu brennenden Produkten (15) über die mehreren Brennkanäle zu den mehreren Brennmodulen (14) zu übertragen; und
parallelen Brennen der mehreren Brenndatenelemente mittels der mehreren Brennmodule (14) auf die mehreren zu brennenden Produkte (15).

2. System nach Anspruch 1, wobei das System ferner ein Mehrkanal-Steuermodul (13) umfasst;
das Mehrkanal-Steuermodul (13) zwischen den mehreren Slave-Host-Computern (12) und den mehreren Brennmodulen (14) geschaltet ist; und
das Mehrkanal-Steuermodul (13) zum Steuern des Verbindens und Trennens der mehreren Brennkanäle konfiguriert ist.

3. System nach Anspruch 2, wobei das Mehrkanal-Steuermodul (13) ein Adaptermodul umfasst; und
das Mehrkanal-Steuermodul (13) zum Steuern des Verbindens und Trennens der mehreren Brennmodule (14) mit bzw. von dem Adaptermodul auf Hardware-Ebene und/oder zum Steuern des Verbindens und Trennens der mehreren Slave-Host-Computer (12) mit bzw. von dem Adaptermodul auf Hardware-Ebene konfiguriert ist, um so das Verbinden und Trennen der mehreren Brennkanäle zu realisieren.

4. System nach Anspruch 3, wobei das Adaptermodul eine erste Gruppe von Adaptern (22) und eine zweite Gruppe von Adaptern (23) umfasst;
die erste Gruppe von Adaptern (22) mit den mehreren Slave-Host-Computern (12) verbunden ist und die zweite Gruppe von Adaptern (23) mit den mehreren Brennmodulen (14) verbunden ist; und
die Anzahl von Adaptern in der ersten Gruppe von Adaptern (22), die Anzahl von Adaptern in der zweiten Gruppe von Adaptern (23), die Anzahl der Slave-Host-Computer (12) und die Anzahl der Brennmodule (14) gleich sind.

5. System nach einem der Ansprüche 2 bis 4, wobei das Mehrkanal-Steuermodul (13) ferner zum Verteilen von Strom an die mehreren Brennmodule (14) konfiguriert ist.

6. System nach einem der Ansprüche 1 bis 4, wobei das System ferner ein Verifizierungsmodul (17) umfasst; und das Verifizierungsmodul (17) zum Durchführen von Datenverifizierung an den mehreren zu brennenden Produkten (15) während der Verarbeitung der mehreren zu brennenden Produkte (15) konfiguriert ist; oder
wobei das System ferner ein Brenndateiverwaltungssystem (16) umfasst;
das Brenndateiverwaltungssystem (16) auf einem anderen Computergerät als dem Master-Host-Computer (11) bereitgestellt ist und eine Kommunikationsverbindung mit dem Master-Host-Computer (11) herstellt; und
das Brenndateiverwaltungssystem (16) zum Speichern von Daten entsprechend den mehreren zu brennenden Produkten (15) konfiguriert ist.

7. System nach einem der Ansprüche 1 bis 4, wobei der Master-Host-Computer (11) mittels desselben Kommunikationsmodus mit den mehreren Slave-Host-Computern (12) verbunden ist; oder
wobei jedes zu brennende Produkt eine BMU (Battery Management Unit) eines Akkupacks ist und jeder BMU entsprechende Brenndaten eine zugrunde liegende Sprungdatei und Anwendungssoftware enthalten.

8. Paralleles Brennverfahren, das auf einen Master-Host-Computer (11) in einem parallelen Brennsystem angewendet wird, wobei das System ferner mehrere Slave-Host-Computer (12) und mehrere Brennmodule (14) umfasst, wobei das Verfahren Folgendes beinhaltet:
Bestimmen, auf der Basis von Produktnummern mehrerer zu brennender Produkte (15), mehrerer Brenndatenelemente entsprechend den mehreren zu brennenden Produkten (15);
Auffordern der mehreren Slave-Host-Computer (12), die mehreren Brenndatenelemente über mehrere nach dem Verbinden der mehreren Slave-Host-Computer (12) eins zu eins mit den mehreren Brennmodulen (14) gebildete Brennkanäle zu den mehreren Brennmodulen (14) zu übertragen; und
Herstellen einer Verbindung zwischen den mehreren Brennmodulen (14) und den mehreren zu brennenden Produkten (15) mittels unterschiedlicher Kommunikationsmodi in den mehreren Brennkanälen und paralleles Brennen der mehreren Brenndatenelemente mittels der mehreren Brennmodule (14) auf die mehreren zu brennenden Produkte (15).

9. Verfahren nach Anspruch 8, wobei das System ferner ein Brenndateiverwaltungssystem (16) umfasst;
das Bestimmen, auf der Basis von Produktnummern mehrerer zu brennender Produkte (15), mehrerer Brenndatenelemente entsprechend den mehreren zu brennenden Produkten (15) Folgendes beinhaltet:
Scannen grafischer Kennungen auf den mehreren zu brennenden Produkten (15), um die Produktnummern der mehreren zu brennende Produkten (15) zu erhalten; und
Erhalten, auf der Basis der Produktnummern der mehreren zu brennenden Produkte (15), mehrerer Brenndatenelemente entsprechend den mehreren zu brennenden Produkten (15) aus dem Brenndateiverwaltungssystem (16).

10. Verfahren nach Anspruch 9, wobei das Auffordern der mehreren Slave-Host-Computer (12), die mehreren Brenndatenelemente über mehrere nach dem Verbinden der mehreren Slave-Host-Computer (12) eins zu eins mit den mehreren Brennmodulen (14) gebildete Brennkanäle zu den mehreren Brennmodule (14) zu übertragen, Folgendes beinhaltet:
Bestimmen erster Datenkennungen der mehreren Brenndatenelemente, die aus dem Brenndateiverwaltungssystem (16) erhalten werden;
Bestimmen einer vorab gespeicherten ersten Entsprechungsbeziehung zwischen zu brennenden Produkten und Brenndaten;
Durchführen einer ersten Verifizierung an den mehreren Brenndatenelementen auf der Basis der ersten Entsprechungsbeziehung und der ersten Datenkennungen der mehreren Brenndatenelemente; und
Auffordern, falls ein erstes Verifizierungsergebnis eine erfolgreiche Verifizierung angibt, der mehreren Slave-Host-Computer (12), um die mehreren Brenndatenelemente über die mehreren Brennkanäle zu den mehreren Brennmodulen (14) zu übertragen;
wobei das Durchführen einer ersten Verifizierung an den mehreren Brenndatenelementen auf der Basis der ersten Entsprechungsbeziehung und der ersten Datenkennungen der mehreren Brenndatenelemente vorzugsweise Folgendes beinhaltet:
Bestimmen, auf der Basis der Produktkennung jedes zu brennenden Produkts, einer zweiten Datenkennung jedes zu brennenden Produkts aus der ersten Entsprechungsbeziehung;
Bestimmen eines ersten Verifizierungsergebnisses, das eine erfolgreiche Verifizierung anzeigt, wenn die erste Datenkennung jedes zu brennenden Produkts mit der zweiten Datenkennung des zu brennenden Produkts übereinstimmt; und
Bestimmen eines ersten Verifizierungsergebnisses, das eine fehlgeschlagene Verifizierung angibt, wenn die erste Datenkennung jedes zu brennenden Produkts nicht mit der zweiten Datenkennung des zu brennenden Produkts übereinstimmt.

11. Verfahren nach Anspruch 9 oder 10, wobei das parallele Brennen der mehreren Brenndatenelemente mittels der mehreren Brennmodule (14) auf die mehreren zu brennenden Produkte (15) Folgendes beinhaltet:
Bestimmen voreingestellter Brennartikel (40) und Brennschritte (50) entsprechend jedem der mehreren zu brennenden Produkte (15); und
paralleles Brennen, gemäß den Brennartikeln (40) und den Brennschritten (50), der mehreren Brenndatenelement mittels der mehreren Brennmodule (14) auf die mehreren zu brennenden Produkte (15).

12. Verfahren nach Anspruch 9 oder 10, wobei das Verfahren ferner Folgendes beinhaltet:
Durchführen einer zweiten Verifizierung an mehreren gebrannten Produkten vor dem Zusammenfügen der mehreren gebrannten Produkte; und
Zusammenfügen, falls ein zweites Verifizierungsergebnis eine erfolgreiche Verifizierung angibt, der mehreren gebrannten Produkte, um mehrere Akkupacks zu erhalten,
wobei das Durchführen einer zweiten Verifizierung an den mehreren gebrannten Produkten vorzugsweise Folgendes beinhaltet:
Erhalten einer zweiten Entsprechungsbeziehung zwischen zu brennenden Produkten und Akkupacks, die während des Brennens gespeichert wird;
Scannen grafischer Kennungen der mehreren gebrannten Produkte, um Produktnummern der mehreren gebrannten Produkte und Batteriekennungen der den mehreren gebrannten Produkten jeweils entsprechenden Akkupacks zu erhalten; und
Durchführen der zweiten Verifizierung an den mehreren gebrannten Produkten auf der Basis der Produktnummern der mehreren gebrannten Produkte, wobei die Batteriekennungen jeweils den mehreren gebrannten Produkten und der zweiten Entsprechungsbeziehung entsprechen.

13. Verfahren nach Anspruch 12, wobei das Durchführen der zweiten Verifizierung an den mehreren gebrannten Produkten auf der Basis der Produktnummern der mehreren gebrannten Produkte, der den mehreren gebrannten Produkten jeweils entsprechenden Batteriekennungen und der zweiten Entsprchungsbeziehung Folgendes beinhaltet:
Bestimmen eines zweiten Verifizierungsergebnisses, das eine erfolgreiche Verifizierung angibt, wenn die Produktnummern der mehreren gebrannten Produkte und die den mehreren gebrannten Produkten jeweils entsprechenden Batteriekennungen mit der zweiten Entsprechungsbeziehung übereinstimmen; und
Bestimmen eines zweiten Verifizierungsergebnisses, das eine fehlgeschlagene Verifizierung angibt, wenn die Produktnummern der mehreren gebrannten Produkte und die den mehreren gebrannten Produkten jeweils entsprechenden Batteriekennungen nicht mit der zweiten Entsprechungsbeziehung übereinstimmen.

14. Verfahren nach Anspruch 12, wobei das Verfahren ferner Folgendes beinhaltet:
Bestimmen einer vorab gespeicherten ersten Entsprechungsbeziehung zwischen zu brennenden Produkten und Brenndaten;
Durchführen einer dritten Verifizierung an den zu brennenden Produkten in den mehreren Akkupacks auf der Basis von Datenkennungen der Brenndaten entsprechend den zu brennenden Produkten in den mehreren Akkupacks und der ersten Entsprechungsbeziehung; und
Durchführen, falls ein drittes Verifizierungsergebnisses eine erfolgreiche Verifizierung angibt, eines Leistungstests an den mehreren Akkupacks.

15. Verfahren nach Anspruch 8, wobei das System ferner ein Verifizierungsmodul (17) umfasst; und das Verfahren ferner Folgendes beinhaltet:
Durchführen, durch das Verifizierungsmodul (17), einer Datenverifizierung an den mehreren zu brennenden Produkten (15) während der Verarbeitung der mehreren zu brennenden Produkte (15), wobei die Datenverifizierung eine erste Verifizierung, eine zweite Verifizierung und eine dritte Verifizierung umfasst.

## Revendications

1. Système de gravure parallèle, comprenant un ordinateur hôte maître (11), une pluralité d'ordinateurs hôtes esclaves (12) et une pluralité de modules de gravure (14),
l'ordinateur hôte maître (11) étant connecté à la pluralité d'ordinateurs hôtes esclaves (12) ;
la pluralité d'ordinateurs hôtes esclaves (12) étant connectés un à un avec la pluralité de modules de gravure (14), constituant une pluralité de canaux de gravure ;
la pluralité de modules de gravure (14) étant connectés à une pluralité de produits à graver (15) en utilisant différents modes de communication parmi la pluralité de canaux de gravure ; et
l'ordinateur hôte maître (11) étant utilisé pour :
appeler la pluralité d'ordinateurs hôtes esclaves (12) pour transmettre de multiples éléments de données de gravure correspondant à la pluralité de produits à graver (15) à la pluralité de modules de gravure (14) par l'intermédiaire de la pluralité de canaux de gravure ; et
graver les multiples éléments de données de gravure au moyen de la pluralité de modules de gravure (14) en parallèle à la pluralité de produits à graver (15).

2. Système selon la revendication 1, le système comprenant en outre un module de commande multicanal (13) ;
le module de commande multicanal (13) étant connecté entre la pluralité d'ordinateurs hôtes esclaves (12) et la pluralité de modules de gravure (14) ; et
le module de commande multicanal (13) étant configuré pour commander la connexion et la déconnexion de la pluralité de canaux de gravure.

3. Système selon la revendication 2, le module de commande multicanal (13) comprenant un module adaptateur ; et
le module de commande multicanal (13) étant configuré pour commander au module adaptateur la connexion et la déconnexion matérielles de la pluralité de modules de gravure (14) et/ou pour commander au module adaptateur la connexion et la déconnexion matérielles de la pluralité d'ordinateurs hôtes esclaves (12) de manière à réaliser la connexion et la déconnexion de la pluralité de canaux de gravure.

4. Système selon la revendication 3, le module adaptateur comprenant un premier groupe d'adaptateurs (22) et un second groupe d'adaptateurs (23) ;
le premier groupe d'adaptateurs (22) étant connectés à la pluralité d'ordinateurs hôtes esclaves (12), et le second groupe d'adaptateurs (23) étant connectés à la pluralité de modules de gravure (14) ; et
le nombre d'adaptateurs dans le premier groupe d'adaptateurs (22), le nombre d'adaptateurs dans le second groupe d'adaptateurs (23), le nombre des ordinateurs hôtes esclaves (12) et le nombre des modules de gravure (14) étant les mêmes.

5. Système selon l'une quelconque des revendications 2 à 4, le module de commande multicanal (13) étant en outre configuré pour distribuer de l'énergie à la pluralité de modules de gravure (14).

6. Système selon l'une quelconque des revendications 1 à 4, le système comprenant en outre un module de vérification (17) ; et le module de vérification (17) étant configuré pour réaliser une vérification de données sur la pluralité de produits à graver (15) pendant le traitement de la pluralité de produits à graver (15) ; ou
le système comprenant en outre un système de gestion de fichiers de gravure (16) ;
le système de gestion de fichiers de gravure (16) étant déployé sur un dispositif informatique autre que l'ordinateur hôte maître (11) et établissant une connexion de communication avec l'ordinateur hôte maître (11) ; et
le système de gestion de fichiers de gravure (16) étant configuré pour stocker des données correspondant à la pluralité de produits à graver (15).

7. Système selon l'une quelconque des revendications 1 à 4, l'ordinateur hôte maître (11) étant connecté à la pluralité d'ordinateurs hôtes esclaves (12) en utilisant le même mode de communication ; ou
chaque produit à graver étant une unité de gestion de batterie, BMU, d'un bloc, et des données de gravure correspondant à chaque BMU contenant un fichier de saut sous-jacent et un logiciel d'application.

8. Procédé de gravure parallèle appliqué à un ordinateur hôte maître (11) dans un système de gravure parallèle, le système comprenant en outre une pluralité d'ordinateurs hôtes esclaves (12) et une pluralité de modules de gravure (14), le procédé comprenant les étapes consistant à :
déterminer, sur la base de numéros de produit d'une pluralité de produits à graver (15), de multiples éléments de données de gravure correspondant à la pluralité de produits à graver (15) ;
appeler la pluralité d'ordinateurs hôtes esclaves (12) pour transmettre les multiples éléments de données de gravure à la pluralité de modules de gravure (14) par l'intermédiaire d'une pluralité de canaux de gravure constitués après la connexion un à un de la pluralité d'ordinateurs hôtes esclaves (12) à la pluralité de modules de gravure (14) ; et
établir une connexion entre la pluralité de modules de gravure (14) et la pluralité de produits à graver (15) en utilisant différents modes de communication parmi la pluralité de canaux de gravure, et graver les multiples éléments de données de gravure au moyen de la pluralité de modules de gravure (14) en parallèle à la pluralité de produits à graver (15).

9. Procédé selon la revendication 8, le système comprenant en outre un système de gestion de fichiers de gravure (16) ;
la détermination, sur la base de numéros de produit d'une pluralité de produits à graver (15), de multiples éléments de données de gravure correspondant à la pluralité de produits à graver (15), comprenant les étapes consistant à :
lire des identifiants graphiques sur la pluralité de produits à graver (15) pour obtenir les numéros de produit de la pluralité de produits à graver (15) ; et
obtenir, sur la base des numéros de produit de la pluralité de produits à graver (15), de multiples éléments de données de gravure correspondant à la pluralité de produits à graver (15), auprès du système de gestion de fichiers de gravure (16).

10. Procédé selon la revendication 9, l'appel de la pluralité d'ordinateurs hôtes esclaves (12), pour transmettre les multiples éléments de données de gravure à la pluralité de modules de gravure (14) par l'intermédiaire d'une pluralité de canaux de gravure constitués après la connexion un à un de la pluralité d'ordinateurs hôtes esclaves (12) à la pluralité de modules de gravure (14), comprenant les étapes consistant à :
déterminer des premiers identifiants de données des multiples éléments de données de gravure obtenus auprès du système de gestion de fichiers de gravure (16) ;
déterminer une première relation de correspondance pré-stockée entre des produits à graver et des données de gravure ;
réaliser une première vérification sur les multiples éléments de données de gravure sur la base de la première relation de correspondance et des premiers identifiants de données des multiples éléments de données de gravure ; et
dans le cas où un premier résultat de vérification indique une vérification réussie, appeler la pluralité d'ordinateurs hôtes esclaves (12) pour transmettre les multiples éléments de données de gravure à la pluralité de modules de gravure (14) par l'intermédiaire de la pluralité de canaux de gravure ;
de préférence, la réalisation d'une première vérification sur les multiples éléments de données de gravure, sur la base de la première relation de correspondance et des premiers identifiants de données des multiples éléments de données de gravure, comprenant les étapes consistant à :
déterminer, sur la base de l'identifiant de produit de chaque produit à graver, un second identifiant de données de chaque produit à graver à partir de la première relation de correspondance ;
déterminer un premier résultat de vérification qui indique une vérification réussie lorsque le premier identifiant de données de chaque produit à graver correspond au second identifiant de données du produit à graver ; et
déterminer un premier résultat de vérification qui indique une vérification échouée lorsque le premier identifiant de données de chaque produit à graver ne correspond pas au second identifiant de données du produit à graver.

11. Procédé selon l'une quelconque des revendications 9 ou 10, la gravure des multiples éléments de données de gravure, au moyen de la pluralité de modules de gravure (14) en parallèle à la pluralité de produits à graver (15), comprenant les étapes consistant à :
déterminer des éléments de gravure prédéfinis (40) et des étapes de gravure (50) correspondant à chaque produit à graver parmi la pluralité de produits à graver (15) ; et
selon les éléments de gravure (40) et les étapes de gravure (50), graver les multiples éléments de données de gravure au moyen de la pluralité de modules de gravure (14) en parallèle à la pluralité de produits à graver (15).

12. Procédé selon l'une quelconque des revendications 9 et 10, le procédé comprenant en outre les étapes consistant à :
réaliser une deuxième vérification sur une pluralité de produits gravés avant d'assembler la pluralité de produits gravés ; et
dans le cas où un second résultat de vérification indique une vérification réussie, assembler la pluralité de produits gravés pour obtenir une pluralité de blocs,
de préférence, la réalisation d'une deuxième vérification sur la pluralité de produits gravés comprenant les étapes consistant à :
obtenir une seconde relation de correspondance entre des produits à graver et des blocs qui est stockée pendant la gravure ;
lire des identifiants graphiques de la pluralité de produits gravés pour obtenir des numéros de produit de la pluralité de produits gravés et des identifiants de batterie des blocs correspondant respectivement à la pluralité de produits gravés ; et
réaliser la deuxième vérification sur la pluralité de produits gravés sur la base des numéros de produit de la pluralité de produits gravés, des identifiants de batterie correspondant respectivement à la pluralité de produits gravés et de la seconde relation de correspondance.

13. Procédé selon la revendication 12, la réalisation de la deuxième vérification sur la pluralité de produits gravés, sur la base des numéros de produit de la pluralité de produits gravés, des identifiants de batterie correspondant respectivement à la pluralité de produits gravés et de la seconde relation de correspondance, comprenant les étapes consistant à :
déterminer un second résultat de vérification qui indique une vérification réussie lorsque les numéros de produit de la pluralité de produits gravés et les identifiants de batterie correspondant respectivement à la pluralité de produits gravés correspondent à la seconde relation de correspondance ; et
déterminer un second résultat de vérification qui indique une vérification échouée lorsque les numéros de produit de la pluralité de produits gravés et les identifiants de batterie correspondant respectivement à la pluralité de produits gravés ne correspondent pas à la seconde relation de correspondance.

14. Procédé selon la revendication 12, le procédé comprenant en outre les étapes consistant à :
déterminer une première relation de correspondance pré-stockée entre des produits à graver et des données de gravure ;
réaliser une troisième vérification sur les produits à graver dans la pluralité de blocs sur la base d'identifiants de données des données de gravure correspondant aux produits à graver dans la pluralité de blocs et de la première relation de correspondance ; et
dans le cas où un troisième résultat de vérification indique une vérification réussie, réaliser un test de performance sur la pluralité de blocs.

15. Procédé selon la revendication 8, le système comprenant en outre un module de vérification (17) ; et le procédé comprenant en outre l'étape consistant à :
réaliser, par l'intermédiaire du module de vérification (17), une vérification de données sur la pluralité de produits à graver (15) pendant le traitement de la pluralité de produits à graver (15), la vérification de données comprenant une première vérification, une deuxième vérification et une troisième vérification.
